# EUROPEAN PATENT APPLICATION

(11) **EP 4 783 622 A1**
(43) Date of publication of application: **29.07.2026**
(21) Application number: 25153535.7
(22) Date of filing: 23.01.2025
(51) Int. Cl.: H04W 4/06, H04W 4/90, H04W 4/021, H04B 7/185, H04B 7/19

(54) **DEVICE AND METHOD FOR DISTRIBUTING A WARNING MESSAGE TO MOBILE TERMINALS SERVED BY A MOBILE COMMUNICATION NETWORK**

(71) Applicant: NTT DOCOMO, INC., Tokyo 100-6150 (JP)
(72) Inventor: BHATTACHARJEE, Sushmit, 80687 Munich (DE); TANAKA, Itsuma, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to various embodiments, a method for distributing a warning message to mobile terminals served by a mobile communication network is described, comprising receiving a request message indicating that a warning message is to be distributed to a set of mobile terminals, in reaction to a determination that a set of radio access network nodes for distributing the warning message includes a radio access network node onboard a geostationary equatorial orbit satellite, determining whether the warning message includes information allowing mobile terminals served by the radio access network node onboard the geostationary equatorial orbit satellite whether to alert their users and removing the radio access network node onboard the geostationary equatorial orbit satellite from the set of radio access network nodes in reaction to the warning message lacking the information and requesting the radio access network nodes of the set of radio access network nodes to distribute the warning message.

## Description

The present disclosure relates to devices and methods for distributing a warning Message to mobile terminals served by a mobile communication network.

Public Warning Systems (PWS) and Earthquake and Tsunami Warning Systems (ETWS) are critical components of modern emergency communication infrastructures. These systems are designed to disseminate urgent alerts to the public in the event of natural disasters, such as earthquakes and tsunamis, as well as other emergencies. The primary goal of PWS and ETWS is to provide timely and accurate information to help mitigate the impact of such events on human lives and property.

PWS and ETWS typically utilize mobile radio cell broadcast technology to deliver messages to a large number of mobile devices within a specific geographic area. This method ensures that alerts are received quickly and efficiently, even when traditional communication networks are congested or compromised.

Non-Terrestrial Networks (NTNs) which include satellite and high-altitude platform systems, offer the potential to extend the reach of PWS and ETWS to remote and underserved areas. However, utilizing an NTN for PWS or ETWS leads to specific challenges. In particular, a radio access network node aboard a geostationary equatorial orbit (GEO) satellite has typically a coverage area that covers large parts outside the impacted area, i.e. the area where the warning message should be distributed. Thus, users may be unnecessarily alerted which may have various undesired effects, such as panic in a region that is not in danger and finally loss of trust in the warning system.

Accordingly, approaches which allow a reliable implementation of a PWS or ETWS in a mobile communication system comprising an NTN architecture are desirable.

According to various embodiments, a method for distributing a warning message to mobile terminals served by a mobile communication network is provided, comprising:
- receiving, by a network component of the mobile communication network, a request message indicating that a warning message is to be distributed to a set of mobile terminals, wherein the request message includes information allowing the network component to determine a set of radio access network nodes of the mobile communication network which should distribute the warning message to reach the mobile terminals of the set of mobile terminals
- determining, by the network component, the set of radio access network nodes and determining whether the set of radio access network nodes includes a radio access network node onboard a geostationary equatorial orbit satellite
- in reaction to a determination that the set of radio access network nodes includes a radio access network node onboard a geostationary equatorial orbit satellite, determining whether the warning message includes information allowing mobile terminals served by the radio access network node onboard the geostationary equatorial orbit satellite whether to alert their users and removing the radio access network node onboard the geostationary equatorial orbit satellite from the set of radio access network nodes in reaction to the warning message lacking information allowing the mobile terminals served by the radio access network node onboard the geostationary equatorial orbit satellite whether to alert their users; and
- requesting the radio access network nodes of the set of radio access network nodes to distribute the warning message.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: illustrates a scenario where the functionality of one or more base stations is provided by one or more satellites.
- Figure 3: illustrates the coverage of a GEO satellite.
- Figure 4: illustrates a warning delivery procedure.
- Figure 5: shows a flow diagram illustrating a method for distributing a warning message to mobile terminals served by a mobile communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for distributing a warning message to mobile terminals served by a mobile communication network, comprising:
   - receiving, by a network component of the mobile communication network, a request message indicating that a warning message is to be distributed to a set of mobile terminals, wherein the request message includes information allowing the network component to determine a set of radio access network nodes of the mobile communication network which should distribute the warning message to reach the mobile terminals of the set of mobile terminals;
   - determining, by the network component, the set of radio access network nodes and determining whether the set of radio access network nodes includes a radio access network node onboard a geostationary equatorial orbit satellite;
   - in reaction to a determination that the set of radio access network nodes includes a radio access network node onboard a geostationary equatorial orbit satellite, determining whether the warning message includes information allowing mobile terminals served by the radio access network node onboard the geostationary equatorial orbit satellite whether to alert their users and removing the radio access network node onboard the geostationary equatorial orbit satellite from the set of radio access network nodes in reaction to the warning message lacking information allowing the mobile terminals served by the radio access network node onboard the geostationary equatorial orbit satellite whether to alert their users; and
   - requesting the radio access network nodes of the set of radio access network nodes to distribute the warning message.
Example 2 is the method of example 1, wherein the information allowing the network component to determine the set of radio access network nodes includes a specification of one or more geographical regions which the warning message should be distributed (i.e. the warning message should be distributed to the mobile terminals served by the mobile communication network which are located in the one or more geographical regions).
Example 3 is the method of example 1 or 2, wherein the information allowing the network component to determine the set of radio access network nodes is a list of tracking areas to which the warning message should be distributed.
Example 4 is the method of any one of examples 1 to 3, wherein the information allowing the mobile terminals served by the radio access network node onboard the geostationary equatorial orbit satellite whether to alert their users includes a specification of one or more geographical areas within a coverage area of the radio access network node onboard the geostationary equatorial orbit satellite where users should be alerted.
Example 5 is the method of example 4, wherein the specification of the one or more geographical areas within a coverage area of the radio access network node onboard the geostationary equatorial orbit satellite comprises warning area coordinates.
Example 6 is the method of any one of examples 1 to 5, comprising determining whether the warning message includes information allowing mobile terminals served by the radio access network node onboard the geostationary equatorial orbit satellite whether to alert their users by checking content of the warning message.
Example 7 is the method of any one of examples 1 to 5, comprising determining whether the warning message includes information allowing mobile terminals served by the radio access network node onboard the geostationary equatorial orbit satellite whether to alert their users by checking an indicator included in the warning request message which indicates whether the warning message includes information allowing mobile terminals served by the radio access network node onboard the geostationary equatorial orbit satellite whether to alert their users.
Example 8 is the method of any one of examples 1 to 7, comprising receiving the request message from a Cell Broadcast Centre Function or from a Public Warning System - Interworking Function.
Example 9 is the method of any one of examples 1 to 8, wherein the network component is a mobility management component.
Example 10 is the method of any one of examples 1 to 9, wherein the network component is a network function of a core network of the mobile communication network.
Example 11 is the method of any one of examples 1 to 10, wherein the network component is an Access and Mobility Management Function or a Mobility Management Entity.
Example 12 is a network component of a mobile communication network, configured to perform the method of any one of examples 1 to 11.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

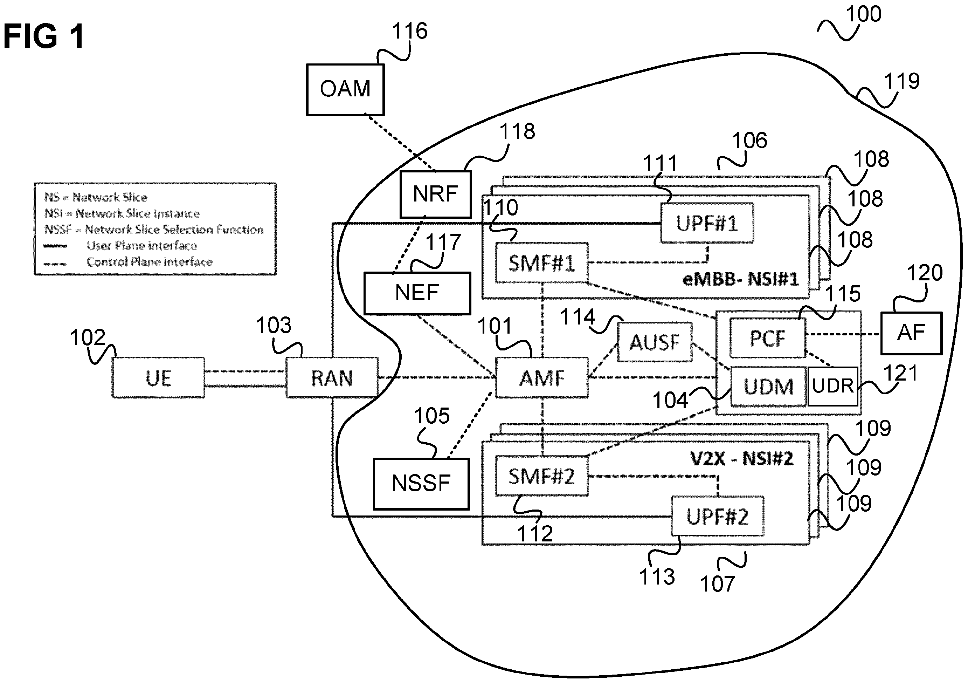

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or 6G or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

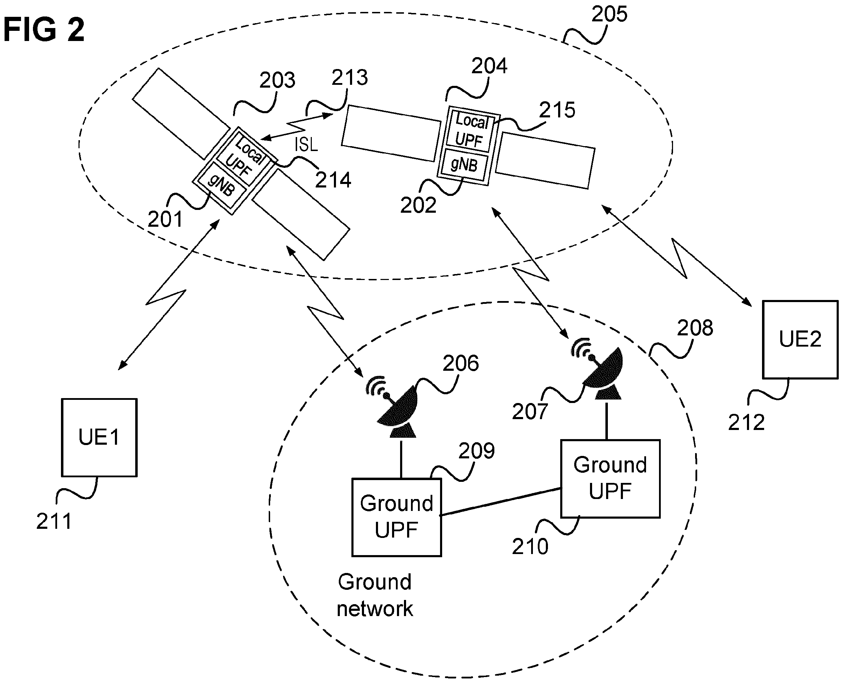

Some base stations (i.e. radio access network nodes) may be implemented by satellites. This means that communication between UEs under the coverage of one or more serving satellites can be supported, using regenerative (or regenerative payload)-based satellite access (onboard gNBs). Such a scenario is illustrated in figure 2.

Figure 2 illustrates a scenario where the functionality of one or more base stations 201, 202 is provided by one or more satellites 203, 204.

In the example of figure 1, a first satellite 203 provides a first base station (gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 203, 204 (which may also be the same ground UPF for each satellite 203, 204).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 203 is the serving satellite for the first UE 211 and the second satellite 204 is the serving satellite for the second UE 212.

An example of an application function (AF) 120 is a Cell Broadcast Centre Function (CBCF). This is a component in the 5G network architecture responsible for managing and delivering cell broadcast messages. These messages are typically used for public warning systems (PWS), emergency alerts, and other broadcast services. The CBCF interfaces with the Access and Mobility Management Function (AMF) 101 in the 5G core network 119 to ensure that broadcast messages are efficiently delivered to the appropriate cells and user equipment (UE) within a specified area.

The content of a warning message may be delivered by a Cell Broadcast Entity (CBE) which is a component responsible for creating and managing the content of warning messages. The CBE interfaces with the Cell Broadcast Centre (CBC) to ensure that these messages are formatted correctly and delivered to the appropriate network elements for broadcast to users.

Since there may not be complete 5G coverage, a Public Warning System - Interworking Function (PWS-IWF) may act as an intermediary between the legacy LTE-based Cell Broadcast Centre (CBC) and the new 5G core network components. It ensures compatibility and smooth operation of public warning systems as networks transition from LTE to 5G. The PWS-IWF facilitates the communication between the CBC and the AMF 101, enabling the delivery of emergency alerts and public warnings over the 5G network.

In a 5G network, the CBCF and PWS-IWF work together to ensure the seamless delivery of public warning messages. The CBCF is responsible for generating and managing the broadcast messages, while the PWS-IWF ensures these messages are compatible with the 5G network infrastructure.

An example for a PWS is an Earthquake and Tsunami Warning System (ETWS).

It is desirable that a PWS works also in an NTN (non-terrestrial network) scenario where (at least some) mobile terminals are served by base stations onboard of satellites, as illustrated in figure 2, in particular by base stations on board of geostationary equatorial orbit (GEO) satellites. A GEO satellite may be understood as a satellite in a circular geosynchronous orbit (approximately) 35786 km in altitude above Earth's equator and following the direction of Earth's rotation.

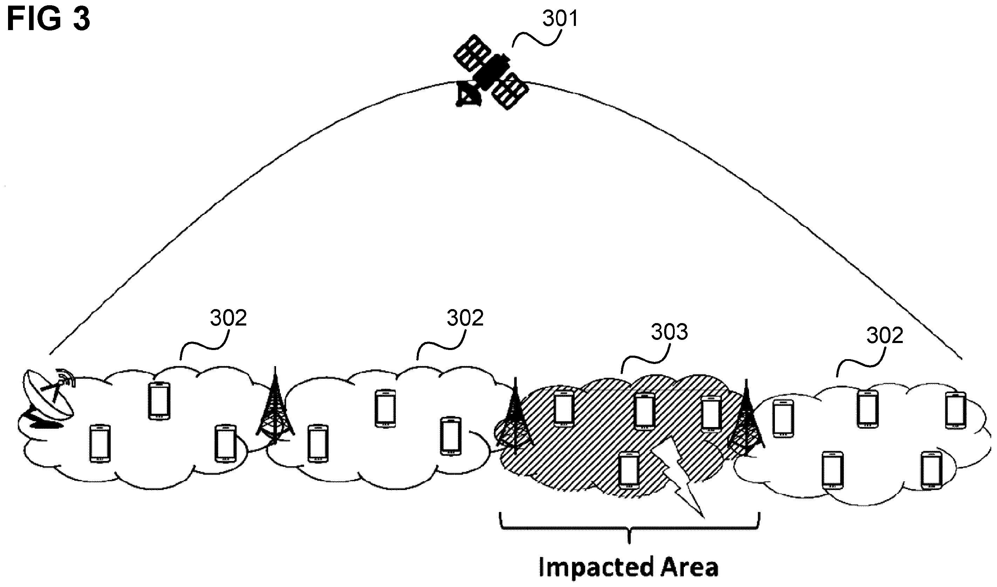

NTN scenarios cause challenges for PWS. Specifically, in case of GEO satellites, because of the higher altitude deployment (the altitude is typically 35786 Km), the coverage area is very large compared to a LEO (low-earth orbit) satellite or HAP (High-altitude platform station). Hence, using a traditional PWS procedure may lead to unnecessary warning messages being distributed to users outside the "impacted area", see figure 3.

Figure 3 illustrates the coverage of a GEO satellite 301.

It should be noted that if herein coverage of a satellite is mentioned, then this is meant to refer of the coverage of RAN node (i.e. base station) onboard the satellite. In this example, the coverage of the GEO satellite 301 spans four geographical zones, e.g. tracking areas 302, 303, while only one of them is the "impacted area" 303 i.e. is the tracking area 303 where a warning should be distributed (i.e. the area presumably affected by a disaster (earthquake, tsunami, etc.)). This is only a simple example and the impacted area 303 may also cover multiple tracking areas, possibly a large number of tracking areas.

It is not desirable to distribute the warning to other tracking areas 302 (which are not impacted by the respective danger like earthquake or tsunami) since this might cause unnecessary panic, confusion and evacuation procedures for non-impacted regions. Moreover, distributing (broadcasting) warning messages to possibly thousands of mobile terminals that do not need them is a waste of energy.

In view of the above, according to various embodiments, a GEO satellite is used for PWS (i.e. warning message distribution) only when it is possibly to restrict (i.e. limit) the area of distribution (i.e. typically) broadcast or at least the output of a warning to user to an "impacted area" 303.

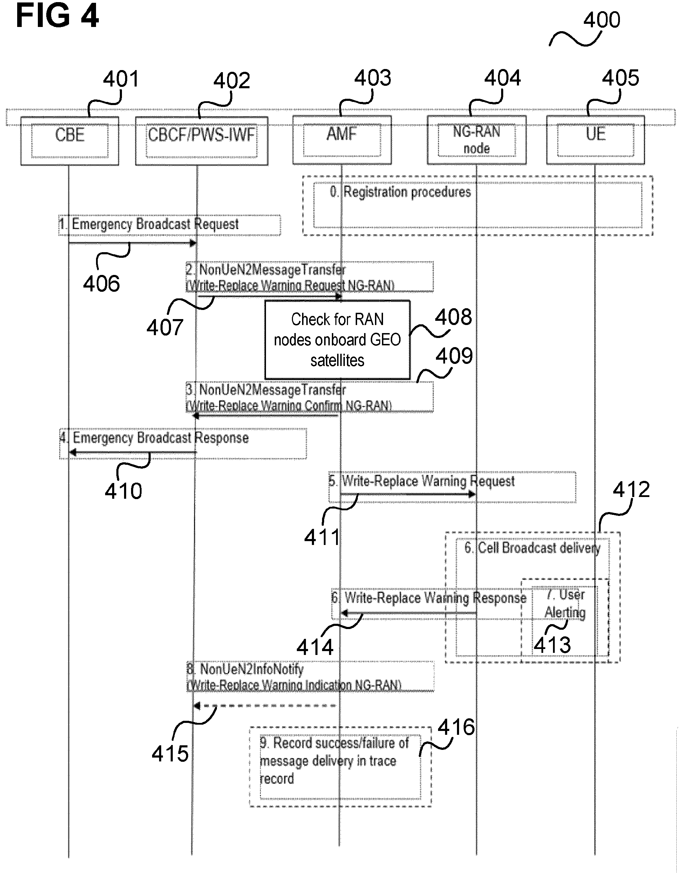

Figure 4 illustrates a warning delivery procedure.

A CBE 401, a CBCF or PWS-IWF 402, an AMF 403, a RAN node (i.e. a base station, e.g. an eNB or a NG(next generation)-RAN node) 404 and a mobile terminal 405 are involved in the procedure. It should be noted that the approaches and procedures described herein may apply to both E-UTRAN (evolved UTMS Terrestrial Radio Access Network, i.e. LTE radio access network) and NG-RAN (i.e. 5G radio access network. Specifically, in the LTE (long-term evolution) case, the AMF 403 may instead by an MME 403.

In 406, the CBE 401 includes an emergency broadcast request to the CBCF/PWS-IWF 402.

In 407, the CBCF/PWS-IWF 402 sends a request (e.g. a Write-Replace Warning Request message NG-RAN) to send a warning message according to the emergency broadcast request to the AMF 403 (e.g. to each of multiple AMFs).

The Write-Replace Warning Request message NG-RAN includes information to which geographical areas the warning message should be delivered. This is typically a list of NG-RAN TAIs (next generation radio access network tracking area identifications). Based on this list, the AMF 403, in 408, selects the appropriate RAN nodes for distribution of the warning message.

In 409, the AMF 403 confirms to the CBCF/PWS-IWF 402 and in 410, the CBCF/PWS-IWF 402 response to the CBE 401 accordingly.

In 411, the AMF 403 sends a request (e.g. a Write-Replace Warning Request) to each RAN node it is determined for distribution of the warning message to distribute the warning message in the coverage area it serves, including the RAN node 404 in the present example.

Accordingly, in 412, the RAN node 404 broadcasts the warning message to all mobile terminals in its coverage area, including the mobile terminal 405 in the present example. The mobile terminal 405 then alerts its user according to the warning message (i.e. display the warning message and/or outputs an audio alarm) in 413.

In 414, the RAN node responds (acknowledges) to the AMF 403 and the AMF 403 in 415 informs the CBCF/PWS-IWF 402 about the warning message distribution and may record success and failure of warning message delivery in a trace required in 416.

The Write-Replace Warning Request (or Indication) message and the Write-Replace Warning Request NG-RAN Request (or Indication) message may include Warning Area Coordinates which may be used to restrict the area in which mobile terminals output (e.g. visually display, typically along with an audio alarm signal) warning (e.g. PWS such as ETWS) messages, in particular to the "impacted area".

Namely, the Warning Area Coordinates information element indicates alert area coordinates of a warning message. The RAN node 404 (eNB or NG-RAN node) passes this information to the mobile terminal 404. The mobile terminal 405 uses this information to conditionally display the warning message contents. Specifically, if a mobile terminal receives a warning message which includes Warning Area Coordinates and the mobile terminal determines that it is not located at those coordinates, it does not alert its user (visually and/or via audio).

However, the conventional warning delivery procedure contains the Warning Area Coordinates as an optional attribute in the Write-Replace Warning Request message and the Write-Replace Warning Request NG-RAN Request message. Accordingly, in case the RAN node 403 is a GEO satellite as in the scenario of figure 3, a mobile terminal located in a tracking area 302 may receive a warning message, may be unable to determine that it is not in the impacted area 302 (because the warning message does not include the Warning Area Coordinates) and alerts its user although that is unnecessary.

To address this issue, according to various embodiments, a logic is introduced into the AMF 403 (or MME 403) such that, in 408, after it has received the Write-Replace Warning Request NG-RAN message from the CBCF/PWS-IWF 402 and it has determined the RAN nodes (in particular NR-RAN nodes) which should distribute the warning message, it checks if there is a node with RAT (radio access technology) type "NR(GEO)" in the determined list of RAN nodes. In other words, it determines whether one of the RAN nodes is onboard a GEO satellite.

If there is, the AMF 403 follows up with a check to see if Warning Area Coordinates (i.e. the Warning Area Coordinates IE) are included in the (e.g. Write-Replace Warning Request NG-RAN) message from the CBCF/PWS-IWF 402. If yes, only then it sends the Write-Replace Warning Message Request to the RAN node onboard the GEO satellite. Else, the AMF 403 (or MME 403) ignores that RAN node from the list of RAN nodes it has determined (when sending Write-Replace Warning Message Requests).

Alternatively, instead of the AMF 403 (or MME 403) checking whether the Warning Area Coordinates are included in the Write-Replace Warning Request NG-RAN message, an indicator can be introduced as part of the delivery attributes of the Write Replace Warning Request NG-RAN message from the CBCF/PWS-IWF 402, e.g. denoted as called as WAC Indicator. This indicator indicates to the AMF 403 (or MME 403) if the Warning Area Coordinates are available at the CBCF/PWS-IWF and included in the warning messages to be distributed to mobile terminals. In this case, the AMF 403 (or MME 403) only needs to check the indicator's value to decide whether to send the Write-Replace Warning Message Request to the RAN node onboard the GEO satellite (without having to check the content of the warning message).

For example, the AMF 404 (or MME 403) proceeds as follows:
- Based on the list of NG-RAN TAIs received from the CBCF/PWS-IWF, it determines (selects) the appropriate NG RAN nodes for distribution.
- If a node with RAT type "NR(GEO)" is among the determined radio access network nodes:
   ∘ Check if "Warning Area Coordinates" is present.
   ∘ If present: continue the usual procedure and distribute Warning message also to RAN node onboard GEO.
   ∘ If NOT present: remove the NR(GEO) type RAN node from the list (of RAN nodes for warning message distribution) and continue procedure.
   ∘ If no node with RAT type "NR(GEO)" is among the selected nodes: continue normal procedure.

For the alternative, where a WAC indicator is used as part of the warning request message from the CBCF/PWS IWF 402 (which is "True/1" if the warning request message includes "Warning Area Coordinates" and "False/0" otherwise) , the AMF 404 (or MME 403) proceeds as follows:
- Based on the list of NG-RAN TAIs received from the CBCF/PWS-IWF, it determines (selects) the appropriate NG RAN nodes for distribution.
- If a node with RAT type "NR(GEO)" is among the selected nodes:
   ∘ Check "WAC Indicator" in the message:
      ▪ if "True/1": continue the usual procedure and distribute Warning message also to RAN node onboard GEO satellite.
      ▪ If "False/0": remove the NR(GEO) type RAN node from list of RAN nodes for distribution and continue procedure.
- If no node with RAT type "NR(GEO)" is among the selected nodes: continue normal procedure

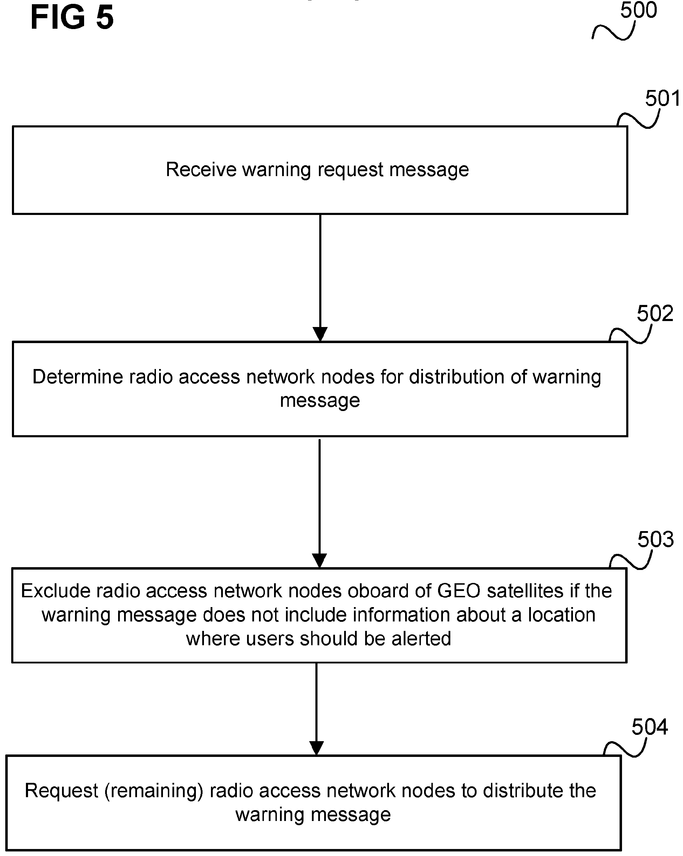

In summary, according to various embodiments, a method is provided as illustrated in figure 5.

Figure 5 shows a flow diagram 500 illustrating a method for distributing a warning message to mobile terminals served by a mobile communication network.

In 501, a request message indicating that a warning message is to be distributed to a set of mobile terminals is received by a network component of the mobile communication network (e.g. AMF in 5G or MME in LTE). The request message includes information allowing the network component to determine a set of radio access network nodes of the mobile communication network which should distribute the warning message to reach the mobile terminals of the set of mobile terminals.

In 502 the network component determines the set of radio access network nodes and determines whether the set of radio access network nodes includes a radio access network node onboard a geostationary equatorial orbit satellite.

In 503, in reaction to a determination that the set of radio access network nodes includes a radio access network node onboard a geostationary equatorial orbit satellite, the network component determines whether the warning message includes (e.g. geographical) information allowing mobile terminals served by the radio access network node onboard the geostationary equatorial orbit satellite whether to alert their users (i.e. display a warning and/or output an audio signal according to the warning message) and removes the radio access network node onboard the geostationary equatorial orbit satellite from the set of radio access network nodes in reaction to the warning message lacking (i.e. not including) information allowing the mobile terminals served by the radio access network node onboard the geostationary equatorial orbit satellite whether to alert their users (e.g. depending on location, i.e. depending on (i.e. based on) where the mobile terminals are located: each mobile terminal may from this information and from its own location determine whether to alert its user).

In 504, the network component requests the radio access network nodes of the set of radio access network nodes to distribute the warning message (wherein possibly, RAN nodes aboard GEO satellites have been removed and thus are not requested to distribute the warning message, i.e. this refers to the remaining radio access network nodes).

According to various embodiments, in other words, a network component (e.g. AMF or MME) checks if a warning message can be forwarded (or not) to a RAN onboard a GEO Satellite without causing unnecessary alerts (i.e. alerting of users which are not located in the impacted area). For this, an extension of an ETWS/PWS procedure to a regenerative payload-based NTN architecture is provided. This provides a capability of restricting the area of distribution to only the `impacted area" as per warning message attributes (in particular whether warning message includes information allowing mobile terminals to determine whether they are in the impacted area).

The method is for example performed by one or more circuits (e.g. of a network component, which may also be realized by multiple devices). A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". According to an embodiment, a communication system is provided which comprises the mobile terminal and which is particular configured (i.e. comprises one or more components configured) to provision the secure element with the sensing profile.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for distributing a warning message to mobile terminals served by a mobile communication network, comprising:
receiving, by a network component of the mobile communication network, a request message indicating that a warning message is to be distributed to a set of mobile terminals, wherein the request message includes information allowing the network component to determine a set of radio access network nodes of the mobile communication network which should distribute the warning message to reach the mobile terminals of the set of mobile terminals;
determining, by the network component, the set of radio access network nodes and determining whether the set of radio access network nodes includes a radio access network node onboard a geostationary equatorial orbit satellite;
in reaction to a determination that the set of radio access network nodes includes a radio access network node onboard a geostationary equatorial orbit satellite,
determining whether the warning message includes information allowing mobile terminals served by the radio access network node onboard the geostationary equatorial orbit satellite whether to alert their users and removing the radio access network node onboard the geostationary equatorial orbit satellite from the set of radio access network nodes in reaction to the warning message lacking information allowing the mobile terminals served by the radio access network node onboard the geostationary equatorial orbit satellite whether to alert their users; and
requesting the radio access network nodes of the set of radio access network nodes to distribute the warning message.

2. The method of claim 1, wherein the information allowing the network component to determine the set of radio access network nodes includes a specification of one or more geographical regions which the warning message should be distributed.

3. The method of claim 1 or 2, wherein the information allowing the network component to determine the set of radio access network nodes is a list of tracking areas to which the warning message should be distributed.

4. The method of any one of claims 1 to 3, wherein the information allowing the mobile terminals served by the radio access network node onboard the geostationary equatorial orbit satellite whether to alert their users includes a specification of one or more geographical areas within a coverage area of the radio access network node onboard the geostationary equatorial orbit satellite where users should be alerted.

5. The method of claim 4, wherein the specification of the one or more geographical areas within a coverage area of the radio access network node onboard the geostationary equatorial orbit satellite comprises warning area coordinates.

6. The method of any one of claims 1 to 5, comprising determining whether the warning message includes information allowing mobile terminals served by the radio access network node onboard the geostationary equatorial orbit satellite whether to alert their users by checking content of the warning message.

7. The method of any one of claims 1 to 5, comprising determining whether the warning message includes information allowing mobile terminals served by the radio access network node onboard the geostationary equatorial orbit satellite whether to alert their users by checking an indicator included in the warning request message which indicates whether the warning message includes information allowing mobile terminals served by the radio access network node onboard the geostationary equatorial orbit satellite whether to alert their users.

8. The method of any one of claims 1 to 7, comprising receiving the request message from a Cell Broadcast Centre Function or from a Public Warning System - Interworking Function.

9. The method of any one of claims 1 to 8, wherein the network component is a mobility management component.

10. The method of any one of claims 1 to 9, wherein the network component is a network function of a core network of the mobile communication network.

11. The method of any one of claims 1 to 10, wherein the network component is an Access and Mobility Management Function or a Mobility Management Entity.

12. A network component of a mobile communication network, configured to perform the method of any one of claims 1 to 11.
